# FASCICULE DE BREVET EUROPEEN

(11) **EP 2 792 017 B1**
(45) Date de publication et mention de la délivrance du brevet: **26.07.2017**
(21) Numéro de dépôt: 12808256.7
(22) Date de dépôt: 12.12.2012
(51) Int. Cl.: H01Q 1/22, H01Q 1/32, H01Q 7/00, H01Q 21/28, G06K 7/00

(54) **DISPOSITIF D'ANTENNE ET PROCÉDÉ DE CONFIGURATION D'ANTENNE**
ANTENNENVORRICHTUNG UND ANTENNENKONFIGURATIONSVERFAHREN
ANTENNA DEVICE AND METHOD OF ANTENNA CONFIGURATION

(30) Priorité: 13.12.2011 FR 1103813
(43) Date de publication de la demande: 22.10.2014
(73) Titulaire: Continental Automotive France, 31100 Toulouse (FR); Continental Automotive GmbH, 30165 Hannover (DE)
(72) Inventeur: KESSLER, Sébastien, F-31280 Dremil-Lafage (FR); CHEIKH, Mohamed, F-31500 Toulouse (FR); TAKACS, Alexandru, F-31400 Toulouse (FR)
(86) Numéro de dépôt international: PCT/EP2012/005134
(87) Numéro de publication internationale: WO 2013/087198

(56) Documents cités:
- EP-A1- 1 816 705
- EP-A1- 2 031 543
- WO-A1-2007/030861
- WO-A1-2009/115115
- JP-A- 2000 306 054
- US-A1- 2006 187 051
- US-A1- 2011 260 940

## Description

L'invention concerne un dispositif d'antenne et un procédé de configuration d'antenne. Plus particulièrement, l'invention s'applique à des antennes radiofréquence (RF) de type NFC (« Near Field Communication », en anglais) c'est-à-dire de type « communication en champ proche » embarquées dans un véhicule automobile.

Les antennes NFC embarquées dans un véhicule automobile ont diverses applications : certaines antennes NFC sont disposées dans les portières du véhicule et font partie du dispositif d'accès main libre au véhicule. Elles communiquent avec un dispositif portable, tel qu'un badge, une clé ou un téléphone portable, équipé également de moyens de communication NFC, qui est porté par l'utilisateur du véhicule. Ces antennes NFC permettent une authentification du dispositif portable, par un échange d'identifiant avec celui-ci afin de déclencher le déverrouillage/verrouillage des portières du véhicule.

D'autres antennes NFC sont situées dans l'habitacle du véhicule et sont, par exemple, intégrées dans un chargeur d'un dispositif portable, par exemple un téléphone portable, disposé à l'intérieur de l'habitacle du véhicule, par exemple, situé sur le tableau de bord du véhicule. Elles permettent l'échange d'informations entre le téléphone portable, qui est posé sur le chargeur, et le système électronique embarqué du véhicule, relié au chargeur. Le téléchargement d'un profil d'utilisateur ou la personnalisation du tableau de bord, le préréglage des stations de radio à partir du téléphone portable peuvent être ainsi réalisés par le système embarqué du véhicule.

Les antennes NFC permettent une communication à faible distance, de l'ordre de 0 cm, c'est-à-dire que le dispositif portable est en contact sur le réceptacle contenant l'antenne NFC, jusqu'à 10 cm. Les caractéristiques de l'antenne NFC embarquée dans le véhicule, sa taille, son impédance (c'est-à-dire son inductance et sa résistance) sont déterminées en fonction de la taille de l'antenne NFC située dans le dispositif portable (badge ou téléphone portable) avec laquelle elle communique et en fonction de la distance de communication qui la sépare de l'antenne NFC du dispositif portable.

En effet, afin d'assurer une communication de bonne qualité, il est important de calibrer la taille de l'antenne NFC du véhicule en fonction de la taille de l'antenne NFC du dispositif portable avec laquelle elle communique. On comprend qu'une antenne NFC du véhicule, de petite taille, ,émet un champ électromagnétique intense et localisé. Une plus grande antenne NFC située dans un dispositif portable aura des difficultés à détecter ou recevoir ce champ intense et localisé. Il s'ensuit pour l'utilisateur un temps d'attente jusqu'à ce que la communication soit établie et/ou un temps de communication rallongé pour l'échange des données.

Un premier problème apparait lorsque l'on doit configurer une antenne NFC, c'est-à-dire choisir sa taille et son impédance, afin qu'elle soit adaptée pour communiquer avec plusieurs appareils portables, ces derniers ayant une taille d'antenne NFC différente. Ceci est le cas lorsque l'antenne NFC doit pouvoir communiquer tant avec un badge, une clé, qu'avec un téléphone portable, porté par l'utilisateur, pour autoriser l'accès au véhicule. Dans ces cas là, il n'est pas possible d'assurer la même qualité de communication avec ces différents types de dispositifs portables.

De même, l'impédance de l'antenne NFC, embarquée dans le véhicule est choisie en fonction d'une distance de communication entre cette antenne et l'antenne NFC du dispositif portable. Si l'impédance est trop élevée, alors une désadaptation de l'antenne NFC du dispositif portable se produit, c'est-à-dire que les deux antennes NFC résonnent à la même fréquence et la communication est perturbée. Ce phénomène est connu de l'homme du métier et ne sera pas plus détaillé ici. Or, une grande impédance est souvent souhaitée afin d'avoir un champ de rayonnement de l'antenne NFC du véhicule, le plus grand possible et de pouvoir ainsi communiquer le plus loin possible avec un dispositif portable. Le problème se pose donc lorsque le dispositif portable est très près d'une antenne NFC de forte impédance. Ceci est le cas, par exemple, lorsqu'une antenne NFC a son impédance configurée, c'est-à-dire choisie, pour détecter la présence d'un dispositif portable à une certaine distance du véhicule et que l'utilisateur présente le dispositif portable à une distance moindre en face de l'antenne NFC du véhicule ou pose le dispositif portable sur un chargeur dans lequel se trouve l'antenne NFC.

Inversement, si l'impédance de l'antenne NFC est choisie pour assurer une bonne communication à faible distance, c'est-à-dire si la valeur d'impédance est peu élevée, alors il y a un risque que l'antenne NFC ne puisse pas communiquer au-delà de cette distance. Ce qui est préjudiciable pour l'utilisateur car il doit se trouver à proximité immédiate du véhicule pour procéder à l'identification du dispositif portable.

Dans un véhicule automobile équipé d'un dispositif d'accès main libre comprenant une antenne NFC et d'un chargeur de téléphone portable comprenant une autre antenne NFC, il y a donc un intérêt de coût à pouvoir concevoir une seule et même antenne NFC pour ces deux utilisations, même si l'antenne NFC du dispositif d'accès est conçue pour communiquer à distance et celle du chargeur de téléphone portable est conçue pour communiquer lorsque le téléphone portable est posé sur le chargeur, c'est-à-dire à proximité immédiate, voire au contact, de l'antenne NFC. Le document "JP 2000 306054 A" décrit un dispositif d'antenne de communication selon le préambule de la revendication 1. L'invention a pour but un dispositif d'antenne permettant à l'antenne NFC, embarquée dans le véhicule, de communiquer avec un dispositif portable de manière optimisée quelque soit la taille de l'antenne NFC située dans ce dispositif portable et quelque soit la distance la séparant de cette antenne.

L'invention propose un dispositif d'antenne de communication, selon la revendication 1, embarqué dans un véhicule automobile, pour communiquer avec une antenne d'un dispositif portable, le dit dispositif d'antenne en particulier comprenant:
- une antenne de communication comprenant au moins deux parties, une première partie, comportant un nombre maximum d'enroulements primaires et une deuxième partie comportant un nombre maximum d'enroulements secondaires,
- un microcontrôleur relié électriquement à la dite antenne,
selon l'invention, le dispositif d'antenne comprend en outre :
- au moins un premier moyen de commutation, situé entre le microcontrôleur, la première partie et la deuxième partie, et permettant de connecter la première partie et/ou la deuxième partie, au microcontrôleur,
- au moins un deuxième moyen de commutation, situé entre le microcontrôleur, et chaque enroulement primaire de la première partie permettant de connecter un nombre déterminé d'enroulements primaires de la première partie au microcontrôleur, et
- au moins un troisième moyen de commutation, situé entre le microcontrôleur et chaque enroulement secondaire de la deuxième partie permettant de connecter un nombre déterminé d'enroulements secondaires de la deuxième partie au microcontrôleur,
- des moyens de contrôle du premier, deuxième et troisième moyens de commutation.

Ainsi selon l'invention, les trois moyens de commutations permettent de configurer l'antenne en taille et en impédance. Selon l'invention, le premier moyen de commutation comprend un premier ensemble d'interrupteurs situé entre la première partie d'antenne et le microcontrôleur, et un deuxième ensemble d'interrupteurs situé entre la deuxième partie d'antenne et le microcontrôleur, afin de connecter respectivement la première partie et/ou la deuxième partie au microcontrôleur.

Et plus particulièrement, les deux ensembles d'interrupteurs sont reliés électriquement chacun à un élément d'adaptation afin d'adapter une fréquence de communication à la première partie et la deuxième partie.

Les éléments d'adaptation sont par exemple des condensateurs. Le deuxième moyen de commutation et le troisième moyen de commutation comportent chacun une pluralité d'interrupteurs, chaque interrupteur étant situé entre le microcontrôleur et respectivement un enroulement primaire et un enroulement secondaire afin de connecter ledit enroulement primaire et/ou ledit enroulement secondaire au microcontrôleur.

L'invention s'applique à une antenne de communication en champ proche, de type NFC.

L'invention concerne également tout dispositif d'accès main libre à un véhicule, ou un dispositif de chargement d'équipement portable comprenant le dispositif d'antenne selon l'une des caractéristiques énumérées ci-dessus.

L'invention concerne tout véhicule automobile comprenant un dispositif d'antenne selon l'une des caractéristiques énumérées ci-dessus.

L'invention propose également un procédé de configuration d'une antenne de communication, utilisant le dispositif d'antenne décrit ci-dessus, comprenant les étapes suivantes :
- Etape 90 : détermination par le microcontrôleur de la ou des parties d'antenne à connecter audit microcontrôleur,
- Etape 100 :
   - connexion de la et/ou des partie(s) de l'antenne déterminées lors de l'étape précédente, au microcontrôleur, par l'intermédiaire du premier moyen de commutation et des moyens de contrôle,
   - connexion au microcontrôleur d'un nombre d'enroulements initial de la et/ou des partie(s) de l'antenne connectée (s) lors de l'étape précédente, par l'intermédiaire du deuxième moyen de commutation et/ou du troisième moyen de commutation et des moyens de contrôle,
- Etape 110 : essai de communication entre l'antenne et une antenne d'un dispositif portable, si la communication réussie :
   - Etape 300 : l'antenne est configurée,
   sinon si la communication a échoué, et
   - Etape 120 : si le nombre d'enroulements est inférieur au nombre maximum d'enroulements, alors,
      - Etape 130: incrémentation du nombre d'enroulements connectés au microcontrôleur par l'intermédiaire des deuxième et troisième moyens de commutation et des moyens de contrôle, et répétition des étapes 110 à 130,
   - sinon, si le nombre d'enroulements connectés au microcontrôleur est égal au nombre maximum d'enroulements primaires et/ou secondaires alors :
      - répétition des étapes 90 à 130 avec les parties d'antenne qui n'ont pas été connectées au microcontrôleur,
         - si lors de l'étape 90, toutes les parties d'antenne ont été connectées alors,
- Etape 200 : fin du procédé de configuration.
D'autres objets, caractéristiques et avantages de la présente invention ressortiront mieux de la description qui suit à titre d'exemple de réalisation non limitatif, faite en référence aux dessins schématiques annexés sur lesquels :
- la figure 1 représente un schéma du dispositif d'antenne, selon l'invention,
- la figure 2 représente un schéma du premier, du deuxième, et du troisième moyens de commutation du dispositif d'antenne selon l'invention,
- la figure 3 représente un schéma d'un mode de réalisation d'un premier moyen de commutation selon l'invention,
- la figure 4 représente un schéma d'un mode de réalisation d'un deuxième ou troisième moyen de commutation selon l'invention,
- la figure 5 représente le logigramme du procédé de configuration d'antenne selon l'invention.

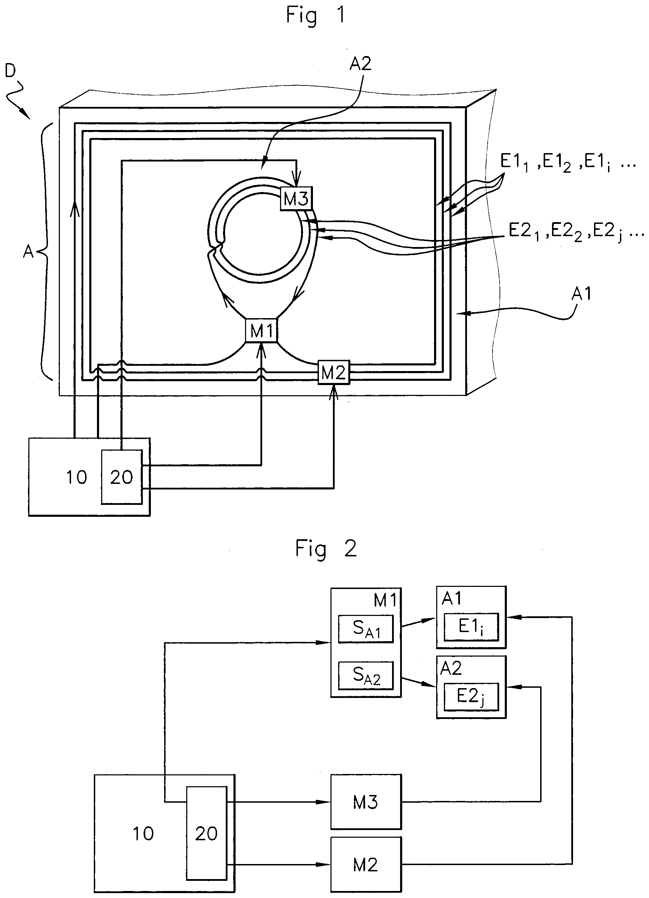

A la figure 1, est représenté un dispositif d'antenne D comprenant une antenne A de communication en champ proche, de type antenne NFC. Le dispositif d'antenne D comprend en outre un microcontrôleur 10, relié électriquement à ladite antenne A. Ce dispositif d'antenne D peut être disposé dans une portière de véhicule et intégré à un dispositif d'accès main libre au véhicule, ou il peut aussi être disposé dans un dispositif de chargement d'un équipement portable, par exemple du type téléphone portable, situé dans l'habitacle, par exemple, sur le tableau de bord du véhicule.

L'antenne A est composée de plusieurs parties, dans cet exemple non limitatif, l'antenne A comprend deux parties, une première partie A1 et une deuxième partie A2, de taille différente, par exemple plus petite que la première partie A1. A la figure 1, la première partie A1 est de forme rectangulaire, elle est située à la périphérie interne du dispositif d'antenne D. Cette première partie A1 est représentée en forme rectangulaire, mais elle peut être de forme hexagonale, carrée, ovale, circulaire, etc. Bien sûr, la forme de la première partie A1 dépend de la place allouée à l'antenne A dans le dispositif d'antenne D. La première partie A1 de l'antenne A comporte plusieurs enroulements primaires E1₁, E1₂, E1ᵢ... de fils de cuivre (ou de tout autre matériau conducteur habituellement utilisé pour des antennes) le long de la périphérie interne du dispositif D.

A la figure 1, la deuxième partie A2 de l'antenne A, se trouve au milieu du dispositif d'antenne D, elle est reliée à la première partie A1 par un premier moyen de commutation M1 et est constituée d'une boucle et de plusieurs enroulements secondaires E2₁, E2₂, E2ᵢ... de fils de cuivre qui sont de forme circulaire et situés au centre du dispositif d'antenne D. Le mode de réalisation ainsi que les avantages de cette deuxième partie A2 ont été décrits dans une demande de brevet déposée par la demanderesse (FR 1103107). De manière similaire, la deuxième partie A2 de l'antenne A peut être de forme rectangulaire, ovale, carrée, hexagonale.

Les illustrations de la première partie A1 et de la deuxième partie A2 données à la figure 1 sont nullement limitatives. Les deux parties A1, A2 peuvent être situées l'une à côté de l'autre dans le dispositif d'antenne D, et/ou peuvent être de taille et/ou de motif différents.

L'antenne A peut aussi comporter plus de deux parties.

Selon l'invention, le dispositif d'antenne comprend (cf. figures 1 et 2) :
- un premier moyen de commutation M1 situé entre le microcontrôleur 10, la première partie A1 et la deuxième partie A2 de l'antenne A, permettant de connecter au microcontrôleur 10, la première partie A1 et/ou la deuxième partie A2 d'antenne A,
- un deuxième moyen de commutation M2, situé entre le microcontrôleur 10 et chaque enroulement primaire E1₁, E1₂, E1ᵢ... de la première partie A1 d'antenne A, permettant de connecter un nombre déterminé d'enroulements primaires E1, de ladite première partie A1 d'antenne A au microcontrôleur 10,
- un troisième moyen de commutation M3, situé entre le microcontrôleur 10 et chaque enroulement secondaire E2₁, E2₂, E2ᵢ... de la deuxième partie A2 d'antenne A, permettant de connecter au microcontrôleur 10 un nombre déterminé d'enroulements secondaires E2ⱼ, de ladite deuxième partie A2 d'antenne A,
- des moyens de contrôle 20 des premier, deuxième et troisième moyens de commutation.

Les premier, deuxième et troisième moyens de commutation M1 M2, M2 sont commandés par les moyens de contrôle 20, qui peuvent être intégrés dans le microcontrôleur 10 (cf. figures 1 et 2). Les moyens de contrôle 20 peuvent se présenter sous forme logicielle.

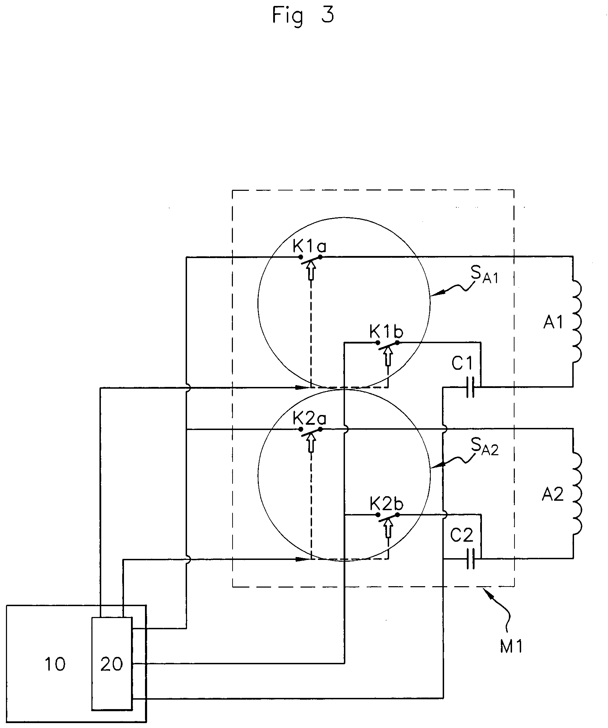

Le premier moyen de commutation M1 comporte deux ensembles d'interrupteurs S_{A1} et S_{A2} (cf. figure 3).

Le premier ensemble d'interrupteurs S_{A1} est situé entre le microcontrôleur 10 et la première partie A1 d'antenne. Il comprend un premier interrupteur K1a et un deuxième interrupteur K1 b, situés entre le microcontrôleur 10 et les deux bornes de l'antenne A1 et un élément d'adaptation, par exemple un condensateur C1 relié au deuxième interrupteur K1 b et à l'antenne A1. Le premier et le deuxième interrupteurs K1 a et K1 b sont connectés électriquement. L'élément d'adaptation C1 permet d'adapter la fréquence d'utilisation de l'antenne en fonction de sa taille. En effet, selon la taille de l'antenne choisie (A1, A2 ou A1 et A2), la fréquence de communication change, il faut donc adapter cette fréquence et choisir le condensateur approprié, selon la partie d'antenne choisie. En fermant le premier ensemble d'interrupteurs S_{A1}, c'est-à-dire en fermant le premier et deuxième interrupteurs K1 a et K1 b simultanément, la première partie A1 d'antenne est connectée au microcontrôleur 10, c'est-à-dire mise sous tension avec la capacité C1 (fermeture du deuxième interrupteur K1 b) et elle peut alors recevoir des informations en provenance du microcontrôleur 10 (fermeture du premier interrupteur K1a). Ces informations sont par exemple des données à échanger avec l'antenne NFC située dans le dispositif portable.

En fermant le premier ensemble d'interrupteurs S_{A1}, la première partie A1 d'antenne est connectée au microcontrôleur 10 et est fonctionnelle, elle est ainsi activée. Elle peut envoyer des données à l'antenne NFC (non représentée) située dans un dispositif portable.

De manière similaire, le deuxième ensemble d'interrupteurs S_{A2} est situé entre le microcontrôleur 10 et la deuxième partie A2 d'antenne. Il comprend un troisième interrupteur K2a et un quatrième interrupteur K2b, et un élément d'adaptation, c'est-à-dire par exemple une capacité C2. Le troisième et le quatrième interrupteurs K2a et K2b sont reliés électriquement. En fermant le deuxième ensemble d'interrupteur S_{A2}, la deuxième partie A2 d'antenne est connectée au microcontrôleur 10 avec la capacité C2 (fermeture du quatrième interrupteur K2b) et elle reçoit des informations en provenance du microcontrôleur 10 (fermeture du troisième interrupteur K2a).

En fermant le deuxième ensemble d'interrupteurs S_{A2}, la deuxième partie A2 d'antenne est donc mise sous tension et fonctionnelle, elle est ainsi activée. Elle peut envoyer des données à une antenne NFC située dans un dispositif portable.

Les moyens de contrôle 20 des moyens de commutations qui sont compris dans le microcontrôleur 10 peuvent ainsi fermer les deux ensembles d'interrupteurs S_{A1} et S_{A2}, séparément ou simultanément, et ainsi configurer la taille de l'antenne A qui est active, qui est alors constituée soit par la première A1 soit par la deuxième partie A2, soit par la réunion de la première et deuxième partie A1, A2 connectées ensemble.

Le premier moyen de commutation M1 permet donc de déterminer la taille de l'antenne A. En fermant/ouvrant les deux ensembles d'interrupteurs S_{A1} et SA qui constituent ce premier moyens de commutation M1; les moyens de contrôle 20 ajustent ainsi la taille de l'antenne A en connectant la première partie A1, ou la deuxième partie de l'antenne A2 ou les deux parties réunies au microcontrôleur 10. La partie ainsi connectée peut échanger des informations avec une antenne NFC du dispositif portable (non représenté à la figure 1).

Une fois la taille de l'antenne A déterminée, grâce au premier moyen de commutation M1, les deuxième et troisième moyens de commutation M2, M3 permettent de régler l'impédance de l'antenne A, en connectant au microcontrôleur 10 un nombre d'enroulements E1ᵢ, E2ⱼ déterminés. En effet, l'impédance d'une antenne est fonction, entre autres, du nombre d'enroulements de fils de cuivre de cette antenne.

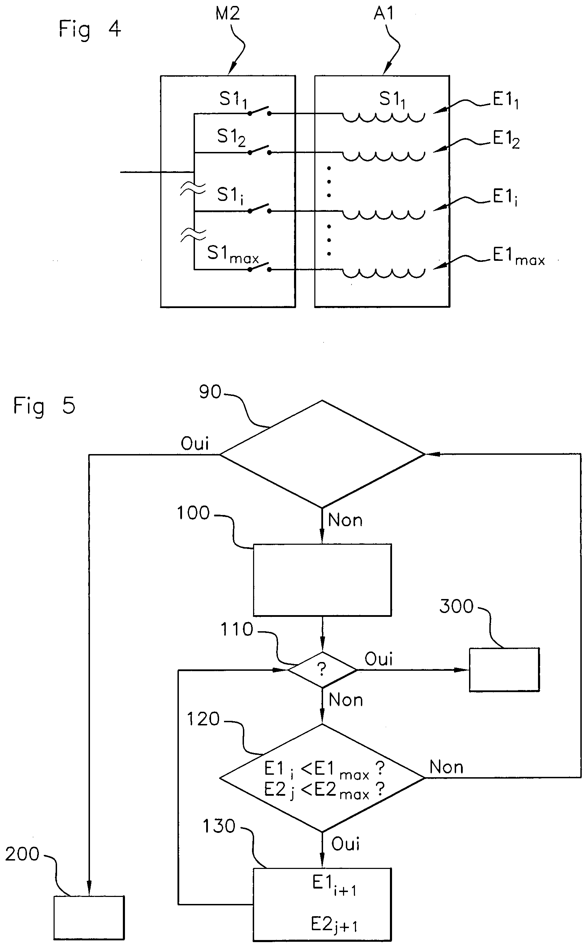

Ainsi, si la première partie A1 de l'antenne A est connectée au microcontrôleur 10, le deuxième moyen de commutation M2 (cf. Figure 4) permet de régler son impédance en connectant un nombre déterminé d'enroulements primaires E1ᵢ de cette première partie A1 au microcontrôleur 10.

Le deuxième moyen de commutation M2 comporte pour cela, une pluralité d'interrupteurs S1₁, S1₂,...S1ᵢ...S_{1MAX}, chacun étant situé entre le microcontrôleur 10 (plus précisément entre les moyens de contrôle 20) et un enroulement primaire E1₁, E1₂,...E1ᵢ ... E1_{MAX}, c'est-à-dire relié à un fil de cuivre de la première partie A1 d'antenne A. Les moyens de contrôle 20 commandent l'ouverture et la fermeture de chaque interrupteur S1ᵢ, S1₂,...S1ᵢ...S1_{MAX}, du deuxième moyen de commutation M2, et connectent ainsi un nombre déterminé d'enroulements primaires au microcontrôleur 10, dans le but d'obtenir une impédance souhaitée de la dite première partie d'antenne A1.

De manière similaire, le troisième moyen de commutation M3 (non représenté) ajuste l'impédance de la deuxième partie A2 d'antenne A et comporte pour cela, une pluralité d'interrupteurs S2₁, S2₂,...S2ᵢ...S2_{MAX} chacun situé entre le microcontrôleur 10 (plus précisément entre les moyens de contrôle 20) et un enroulement secondaire E2₁, E2₂,...E2ᵢ ... E2_{MAX} de la deuxième partie A2. Les moyens de contrôle 20 commandent l'ouverture et la fermeture de chaque interrupteur S2₁, S2₂,...S2ᵢ...S2_{MAX} du troisième moyen de commutation M3, afin de connecter au microcontrôleur 10 un nombre déterminé d'enroulements secondaires E2₁, E2₂,...E2ᵢ ... E2_{MAX}, dans le but d'obtenir une impédance souhaitée de la dite deuxième partie d'antenne A2.

Ainsi, si la deuxième partie A2 de l'antenne A est connectée au microcontrôleur 10, le troisième moyen de commutation M3 permet de régler son impédance en connectant un nombre d'enroulements secondaires E2ⱼ au microcontrôleur 10.

Les nombres d'enroulements primaires et secondaires E1ᵢ et E2ⱼ qui sont ainsi sélectionnés varient de un enroulement à un nombre maximum d'enroulements primaires et secondaires (respectivement E1_{MAx} et E2_{MAx}) de fils de cuivre physiquement présents sur chacune des parties A1, A2 de l'antenne A.

Les premier, deuxième et troisième moyens de commutations M1, M2, M3 sont commandés par les moyens de contrôle 20 se trouvant dans le microcontrôleur 10, selon un procédé de configuration d'antenne décrit plus loin.

Le microcontrôleur 10 gère la communication entre l'antenne A et l'antenne NFC du véhicule et l'antenne NFC du dispositif portable (non représenté) avec laquelle elle communique.

Les représentations des moyens de commutations M1, M2, M3 ainsi que des interrupteurs K1a, K1b, K2a, K2b, S1₁, S1₂,...S1ᵢ...S1_{MAX}, S2₁, S2₂,...S2ᵢ...S2_{MAx} sont données à titre non limitatif, et ces interrupteurs peuvent être réalisés par tous moyens de commutation équivalents connus de l'homme du métier.

Le procédé de configuration d'antenne, selon l'invention est illustré à la figure 5.

Lors d'une première étape 90, le microcontrôleur 10-détermine quelle est la ou quelles sont les partie(s) d'antenne à connecter au microcontrôleur 10. Cette étape peut être réalisée de manière logicielle.

Lors de l'étape 100, la configuration de l'antenne A est initialisée. Par défaut, dans notre exemple, le procédé est initialisé par connexion de la première partie d'antenne A1 au microcontrôleur 10, par l'intermédiaire du premier moyen de commutation M1. Ceci est réalisé par les moyens de contrôle 20 qui ferment le premier ensemble d'interrupteurs S_{A1}. Puis, les moyens de contrôle 20 connectent au microcontrôleur 10, par l'intermédiaire du deuxième moyen de commutations M2 (en fermant le nombre approprié d'interrupteurs S1₁, S1₂,...S1ᵢ...S1_{MAX}), un nombre d'enroulement primaire E1, d'initialisation, inférieur au nombre maximum E1_{MAX} d'enroulements primaires de la dite première partie A1. Lors de l'initialisation de la configuration, il est judicieux de choisir d'abord la partie d'antenne la plus grande (A1) afin d'obtenir un rayonnement plus large et de détecter toute antenne NFC située autour du véhicule.

Lors de l'étape 110, l'antenne A ainsi configurée initialement en taille et impédance reçoit un message du microcontrôleur 10, qu'elle envoie vers l'antenne du dispositif portable. Si la communication est réussie, c'est-à-dire si l'antenne A du véhicule reçoit un message de retour en provenance de l'antenne du dispositif portable, (étape 110), alors le procédé s'arrête (étape 300) et l'antenne A est configurée, c'est-à-dire que sa taille et son impédance ont été choisie pour permettre une communication avec l'antenne NFC du dispositif portable.

S'il n'y pas de communication entre les deux antennes ou si cette communication échoue (étape 110) et si le nombre d'enroulements primaires E1, est inférieur au nombre maximum E1_{MAx} d'enroulements primaires de la première partie A1 (étape 120), alors le procédé propose que lors de l'étape 130, le nombre d'enroulements primaires E1ᵢ connectés au microcontrôleur 10 soit incrémenté, par exemple en ajoutant un enroulement primaire E1ᵢ₊₁ c'est à dire en fermant un interrupteur supplémentaire S1₁, S1₂,...S1ᵢ...S1_{MAX} par l'intermédiaire du deuxième moyen de commutation M2. Puis, le procédé retourne à l'étape 110 et un essai de communication est réalisé entre l'antenne A ainsi configurée (c'est-à-dire A1) avec un enroulement primaire supplémentaire E1ᵢ₊₁ et l'antenne du dispositif portable. Le procédé répète ainsi les étapes 110 à 130 tant que la communication n'a pas été établie et que le nombre d'enroulements primaires de la première partie d'antenne A1 E1ᵢ, qui sont connectés au microcontrôleur 10 (par la fermeture des interrupteurs associés) est inférieur au nombre maximum d'enroulements primaires E1_{MAX}.

Si la communication est réussie à l'étape 110 avec un certain nombre d'enroulements primaires (par exemple E1ᵢ₊₁) connectés au microcontrôleur 10, alors le procédé s'arrête (étape 300) et la configuration d'antenne A est terminée.

Cependant, lorsqu'à l'étape 120, le nombre maximum d'enroulements primaires E1_{MAX} de la première partie d'antenne A1 a été atteint, et que la communication n'a toujours pas pu être établie à l'étape précédente 110, alors le procédé revient à l'étape 90, et le microcontrôleur 109 détermine quel(les) sont la ou les partie(s) d'antenne qui n'ont pas encore été connectées au microcontrôleur 10. Dans notre exemple, il s'agit de la deuxième partie d'antenne A2.

Lors de l'étape 100, les moyens de contrôle 20, à l'aide du premier moyen de commutations M1, configure l'antenne A avec la ou les partie(s) d'antenne qui n'a pas encore été connectée(s), en l'occurrence, dans cet exemple, la deuxième partie A2 d'antenne A est alors connectée au microcontrôleur 10. Pour cela les moyens de contrôle 20 ouvrent d'abord le premier ensemble d'interrupteurs S_{A1}, afin de déconnecter la première partie d'antenne A1 du microcontrôleur 10, puis ferment le deuxième ensemble d'interrupteurs SA afin de connecter la deuxième partie d'antenne A2 au microcontrôleur 10. Ensuite, à l'aide du troisième moyen de commutations M3, les moyens de contrôle 20 connectent au microcontrôleur 10 un nombre d'enroulement secondaire E2ⱼ initial de cette deuxième partie A2 d'antenne en fermant un nombre approprié d'interrupteurs S2₁, S2₂, ...S2ᵢ... S2_{MAX}.

Les étapes 110 à 130 sont alors répétées avec la deuxième partie d'antenne A2, et le nombre d'enroulements secondaires E2ⱼ.

Si la communication (étape 110) est réussie avec un nombre d'enroulements secondaires E2ₖ, alors le procédé s'arrête et la configuration d'antenne A est terminée (étape 300). La taille de l'antenne et son impédance étant ainsi configurées, l'antenne est prête pour communiquer efficacement avec un dispositif portable déterminé.

Sinon, tant que la communication échoue (étape 110), et que le nombre d'enroulements secondaires E2ⱼ est inférieur au nombre maximum d'enroulements secondaires E2_{MAX} (étape 120) de la deuxième partie d'antenne A2, alors les moyens de contrôle 20 incrémentent le nombre d'enroulements secondaires connectés au microcontrôleur 10 lors de l'étape 130, en fermant un à un plus d'interrupteurs S2₁, S2₂,...S2ᵢ...S2_{MAX} et le procédé retourne à l'étape 110 afin de tenter de communiquer avec l'antenne du dispositif portable.

Si la communication ne peut pas être réalisée une fois le nombre maximum d'enroulements secondaires E2_{MAx} de la deuxième partie A2 d'antenne atteint, alors le procédé revient à l'étape 90. Si la première A1 et la deuxième partie A2 d'antenne A n'ont pas été connectées au microcontrôleur 10 simultanément (étape 90), les moyens de contrôle 20 connectent alors, à l'aide du premier moyen de commutation M1, les deux parties d'antenne A1, A2 en simultanée (étapes 100) audit microcontrôleur 10, en fermant les deux ensembles d'interrupteurs S_{A1} et S_{A2}. Puis les moyens de contrôle 20 connectent au microcontrôleur 10 pour chacune de ces parties, à l'aide des deuxième et troisième moyens de commutation M2 et M3, des nombres d'enroulements E1ᵢ, E2ⱼ initiaux. Les étapes 110 à 130 sont ensuite répétées, simultanément, pour les deux parties A1 et A2, jusqu'à ce qu'une communication soit établie avec l'antenne du dispositif portable et tant que le nombre d'enroulements primaires et secondaires (E1ᵢ, E2ⱼ) sont inférieurs au nombre maximum d'enroulements primaires et secondaires (E1_{MAX,} E2_{MAX}) respectifs de chaque partie (A1, A2).

En effet, les caractéristiques techniques de la configuration d'antenne A constituée par les deux parties A1 et A2 reliées entres elles, sont différentes des deux parties A1, A2 prises séparément. Cette troisième configuration (A1 et A2) possède des qualités de champ rayonné différentes, en l'occurrence le champ émis est plus uniforme que celui émis par les parties d'antenne (A1, A2) prises séparément et peut permettre d'établir une communication avec un dispositif portable que les deux parties A1 et A2 activées séparément ne peuvent pas réaliser.

Si, à l'étape 120, le nombre maximum d'enroulements primaires et secondaires (E1_{MAX,} E2_{MAx}) est atteint pour chaque partie d'antenne (A1 et A2), alors le procédé retourne à l'étape 90.

Si, à l'étape 90, il s'avère que toutes les configurations, c'est-à-dire dans notre exemple, les trois configurations, A1 ou A2 prises séparément ou simultanément ont été connectées au microcontrôleur 10, chacune avec un nombre maximum d'enroulement primaire et/ou secondaire (E1_{MAX}, E2_{MAX}) alors le procédé s'arrête (étape 200), et l'antenne A n'a pas pu être configurée, c'est-à-dire qu'il n'a pas été possible de trouver une taille et une impédance lui permettant de pouvoir communiquer avec l'antenne NFC du dispositif portable.

Le procédé de configuration selon l'invention consiste donc :
- à choisir initialement une taille et une impédance de l'antenne de communication A,
- à faire un essai de communication entre l'antenne de communication ainsi configurée et une antenne NFC d'un dispositif portable,
- à modifier la taille et l'impédance de la dite antenne de communication jusqu'à ce qu'une communication soit établie.

Il est à noter que le procédé de configuration d'antenne est très rapide, et ne dure que quelques millisecondes, même si les trois configurations d'antenne, première partie A1, deuxième partie A2, et première A1 et deuxième A2 parties en simultanée, sont testées successivement et chacune avec des incréments d'enroulements. En effet, pour vérifier la communication à l'étape 110, il suffit à l'antenne A d'envoyer un signal radiofréquence d'une milliseconde et d'attendre une réponse dans les millisecondes qui suivent. Ce type d'envoi RF est connu de l'homme du métier et est appelé « ping ».

Bien sûr, l'invention n'est limitée ni à deux parties d'antenne A1, A2, ni à trois moyens de commutation M1, M2, M3. Le dispositif d'antenne D peut comprendre une antenne constituée d'une pluralité de parties A1...Ai, toutes reliées entres elles par une pluralité de premiers moyens de commutation M1...Mi, , chaque partie ayant un moyen de commutation propre dédié à la connexion au microcontrôleur 10 du nombre d'enroulements pour cette partie.

L'invention permet donc de configurer une antenne de communication de type NFC afin que celle-ci puisse communiquer rapidement et efficacement avec un dispositif portable quelque soit la distance la séparant de ce dispositif (dans les limites d'une communication NFC bien sûr) et quelque soit la taille de l'antenne de communication située dans ce dispositif.

De plus le dispositif d'antenne selon l'invention est peu coûteux, il consiste en un circuit comprenant des interrupteurs et des moyens de commutation, et en un logiciel intégré dans un microcontrôleur (moyens de contrôle 20 des moyens de commutation).

L'invention permet aussi de configurer une seule et même antenne NFC sur un véhicule pour des applications différentes et permet donc l'utilisation d'une antenne générique sur le véhicule capable de communiquer avec différents téléphones portables équipés de moyens de communication comprenant des antennes NFC de toutes dimensions et de toutes caractéristiques (impédance) disponibles sur le marché, ce qui permet aussi de réduire les coûts de développement et de fabrication de cette antenne.

L'invention n'est pas limitée aux antennes NFC et s'applique à toute antenne radio fréquence.

## Revendications

1. Dispositif d'antenne (D) de communication, pouvant être disposé dans une portière de véhicule, ou dans un dispositif de chargement d'un équipement portable situé dans un habitacle de véhicule, pour communiquer avec une antenne d'un dispositif portable, le dit dispositif d'antenne (D) comprenant :
• une antenne de communication (A) comprenant au moins deux parties, une première partie (A1), comportant un nombre maximum d'enroulements primaires (E1_{MAX}) de fils de cuivre et une deuxième partie (A2) comportant un nombre maximum d'enroulements secondaires (E2_{MAX}) de fils de cuivre reliées entres elles par un premier moyen de commutation (M1),
• un microcontrôleur (10) relié électriquement à la dite antenne (A), gérant la communication entre l'antenne de communication (A) et l'antenne du dispositif portable,
ledit dispositif d'antenne (D) étant **caractérisé en ce qu'**il comprend en outre :
• des moyens de contrôle (20) intégrés dans le microcontrôleur,
• au moins un deuxième moyen de commutation (M2), comprenant une pluralité d'interrupteurs (S1₁, S1₂...S1_{MAX}) commandé par les moyens de contrôle (20) chaque interrupteur étant situé entre le microcontrôleur (10), et chaque enroulement primaire (E1ᵢ) de la première partie (A1) et permettant de connecter un nombre déterminé d'enroulements primaires (E1ᵢ) de la première partie (A1) au microcontrôleur (10), et
• au moins un troisième moyen de commutation (M3), comprenant une pluralité d'interrupteurs (S2₁, S2₂...S2_{MAX}) commandé par les moyens de contrôle (20) chaque interrupteur étant situé entre le microcontrôleur (10) et chaque enroulement secondaire (E2ⱼ) de la deuxième partie (A2) et permettant de connecter un nombre déterminé d'enroulements secondaires (E2ⱼ) de la deuxième partie (A2) au microcontrôleur (10),
• le premier moyen de commutation (M1), comprenant deux ensembles d'interrupteurs (S_{A1}, S_{A2}), un premier ensemble d'interrupteur (S_{A1}) situé entre le microcontrôleur (10), et la première partie (A1) et un deuxième ensemble d'interrupteur (S_{A2}) située entre le microcontrôleur (10) et la deuxième partie (A2), commandé par les moyens de contrôle (20) permettant de connecter la première partie (A1) et/ou la deuxième partie (A2) au microcontrôleur (10),

2. Dispositif d'antenne (D), selon la revendication précédente, **caractérisé en ce que** les deux ensembles d'interrupteurs (S_{A1}, S_{A2}) sont reliés électriquement chacun à un condensateur (C1, C2) afin d'adapter une fréquence de communication de la première partie (A1) et de la deuxième partie (A2).

3. Dispositif d'antenne (D), selon l'une quelconque des revendications précédentes, **caractérisé en ce que** l'antenne (A) est une antenne de communication en champ proche.

4. Dispositif d'accès main libre à un véhicule, **caractérisé en ce qu'**il comprend le dispositif d'antenne (D) selon l'une quelconque des revendications précédentes.

5. Dispositif de chargement d'équipement portable, **caractérisé en ce qu'**il comprend le dispositif d'antenne (D), selon l'une des revendications 1 à 3.

6. Procédé de configuration d'un dispositif d'antenne de communication (A), utilisant le dispositif d'antenne (D) selon l'une quelconque des revendications précédentes, **caractérisé en ce qu'**il comprend les étapes suivantes :
• Etape 90 : détermination par le microcontrôleur (10) de la ou des parties d'antenne (A1, A2) à connecter audit microcontrôleur (10),
• Etape 100 :
- connexion de la et/ou des partie(s) (A1, A2) de l'antenne (A) déterminées lors de l'étape précédente au microcontrôleur (10), par l'intermédiaire du premier moyen de commutation (M1) et des moyens de contrôle (20),
- connexion au microcontrôleur (10) d'un nombre d'enroulements initial (E1ᵢ, E2ⱼ) de la et/ou des partie(s) (A1, A2) de l'antenne (A) connectée (s) lors de l'étape précédente, par l'intermédiaire du deuxième moyen de commutation (M2) et/ou du troisième moyen de commutation (M3) et des moyens de contrôle (20),
• Etape 110: essai de communication entre l'antenne (A) et une antenne d'un dispositif portable, si la communication est réussie :
- Etape 300 : l'antenne est configurée,
sinon si la communication a échoué, et
- Etape 120 : si le nombre d'enroulements (E1ᵢ, Exⱼ) est inférieur au nombre maximum d'enroulements (E1_{MAX}, E2_{MAX}), alors,
• Etape 130 : incrémentation du nombre d'enroulements (E1ᵢ₊₁, E2ⱼ₊₁) connectés au microcontrôleur (10) par l'intermédiaire des deuxième et troisième moyens de commutation (M2, M3) et des moyens de contrôle (20), et répétition des étapes 110 à 130,
- sinon, si le nombre d'enroulements (E1ᵢ₊₁, E2ⱼ₊₁) connectés au microcontrôleur (10) est égal au nombre maximum d'enroulements primaires et/ou secondaires (E1_{MAX}, E2_{MAX}), alors :
• répétition des étapes 90 à 130 avec les parties d'antenne (A1, A2) qui n'ont pas été connectées au microcontrôleur (10),
• si lors de l'étape 90, toutes les parties d'antenne ont été connectées alors,
• Etape 200 : fin du procédé de configuration.

7. Véhicule automobile comprenant un dispositif d'antenne (D) selon l'une quelconque des revendications 1 à 3.

## Patentansprüche

1. Kommunikationsantennenvorrichtung (D), die in einer Fahrzeugtür oder in einer Ladevorrichtung eines tragbaren Geräts, das in einem Fahrzeuginnenraum angeordnet ist, angeordnet werden kann, um mit einer Antenne einer tragbaren Vorrichtung zu kommunizieren, wobei die Antennenvorrichtung (D) Folgendes aufweist:
- eine Kommunikationsantenne (A), die mindestens zwei Teile aufweist, einen ersten Teil (A1), der eine maximale Anzahl von Primärwicklungen (E1_{MAX}) von Kupferdrähten aufweist, und einen zweiten Teil (A2), der eine maximale Anzahl von Sekundärwicklungen (E2_{MAX}) von Kupferdrähten aufweist, die durch ein erstes Schaltmittel (M1) miteinander verbunden sind,
- einen Mikrocontroller (10), der elektrisch mit der Antenne (A) verbunden ist, der die Kommunikation zwischen der Kommunikationsantenne (A) und der Antenne der tragbaren Vorrichtung verwaltet,
wobei die Antennenvorrichtung (D) **dadurch gekennzeichnet ist, dass** sie ferner Folgendes aufweist:
- Kontrollmittel (20), die in dem Mikrocontroller integriert sind,
- mindestens ein zweites Schaltmittel (M2), das mehrere Schalter (S1₁, S1₂... S1_{MAX}) aufweist, das von den Kontrollmitteln (20) gesteuert wird, wobei jeder Schalter zwischen dem Mikrocontroller (10) und jeder Primärwicklung (E1ᵢ) des ersten Teils (A1) angeordnet ist und ermöglicht, eine bestimmte Anzahl an Primärwicklungen (E1ᵢ) des ersten Teils (A1) mit dem Mikrocontroller (10) zu verbinden, und
- mindestens ein drittes Schaltmittel (M3), das mehrere Schalter (S2₁, S2₂... S2_{MAX}) aufweist, das von den Kontrollmitteln (20) gesteuert wird, wobei jeder Schalter zwischen dem Mikrocontroller (10) und jeder Sekundärwicklung (E2ᵢ) des zweiten Teils (A2) angeordnet ist und ermöglicht, eine bestimmte Anzahl an Sekundärwicklungen (E2ⱼ) des zweiten Teils (A2) mit dem Mikrocontroller (10) zu verbinden,
- das erste Schaltmittel (M1), das zwei Schalteranordnungen (S_{A1}, S_{A2}) aufweist, eine erste Schalteranordnung (S_{A1}), die zwischen dem Mikrocontroller (10) und dem ersten Teil (A1) angeordnet ist, und eine zweite Schalteranordnung (S_{A2}), die zwischen dem Mikrocontroller (10) und dem zweiten Teil (A2) angeordnet ist, die durch die Kontrollmittel (20) gesteuert wird, die ermöglichen, den ersten Teil (A1) und/oder den zweiten Teil (A2) mit dem Mikrocontroller (10) zu verbinden,

2. Antennenvorrichtung (D) nach dem vorhergehenden Anspruch, **dadurch gekennzeichnet, dass** die zwei Schalteranordnungen (S_{A1}, S_{A2}) jeweils elektrisch mit einem Kondensator (C1, C2) verbunden sind, um eine Kommunikationsfrequenz des ersten Teils (A1) und des zweiten Teils (A2) anzupassen.

3. Antennenvorrichtung (D) nach einem der vorhergehenden Ansprüche, **dadurch gekennzeichnet, dass** die Antenne (A) eine Nahfeldkommunikationsantenne ist.

4. Handfreie Zugangsvorrichtung zu einem Fahrzeug, **dadurch gekennzeichnet, dass** sie die Antennenvorrichtung (D) nach einem der vorhergehenden Ansprüche aufweist.

5. Ladevorrichtung eines tragbaren Geräts, **dadurch gekennzeichnet, dass** sie die Antennenvorrichtung (D) nach einem der Ansprüche 1 bis 3 aufweist.

6. Konfigurationsverfahren einer Kommunikationsantennenvorrichtung (A), das die Antennenvorrichtung (D) nach einem der vorhergehenden Ansprüche verwendet, **dadurch gekennzeichnet, dass** es die folgenden Schritte aufweist:
- Schritt 90: Bestimmen durch den Mikrocontroller (10) des oder der Antennenteile (A1, A2), das oder die an den Mikrocontroller (10) anzuschließen ist oder sind,
- Schritt 100:
- Anschließen des und/oder der Teile (A1, A2), der Antenne (A), die während des vorhergehenden Schrittes bestimmt werden, an den Mikrocontroller (10) durch das erste Schaltmittel (M1) und die Kontrollmittel (20),
- Anschließen einer anfänglichen Anzahl an Wicklungen (E1ᵢ, E2ⱼ) des und/oder der Teile (A1, A2) der Antenne (A), die während des vorhergehenden Schrittes angeschlossen werden, an den Mikrocontroller (10) durch das zweite Schaltmittel (M2) und/oder das dritte Schaltmittel (M3) und die Kontrollmittel (20),
- Schritt 110: Testen der Kommunikation zwischen der Antenne (A) und einer Antenne einer tragbaren Vorrichtung, wenn die Kommunikation gelungen ist:
- Schritt 300: die Antenne wird konfiguriert, ansonsten, wenn die Kommunikation fehlgeschlagen ist, und
- Schritt 120: wenn die Anzahl an Wicklungen (E1ᵢ, E2ⱼ) niedriger als die maximale Anzahl an Wicklungen (E1_{MAX}, E2_{MAX}) ist, dann
- Schritt 130: Erhöhen der Anzahl an Wicklungen (E1ᵢ₊₁, E2ⱼ₊₁), die durch das zweite und dritte Schaltmittel (M2, M3) und die Kontrollmittel (20) an den Mikrocontroller (10) angeschlossen werden, und Wiederholen der Schritte 110 und 130,
- ansonsten, wenn die Anzahl an Wicklungen (E1ᵢ₊ᵢ, E2ⱼ₊₁), die an den Mikrocontroller (10) angeschlossen werden, gleich der maximalen Anzahl an Primär- und/oder Sekundärwicklungen (E1_{MAX}, E2_{MAX}) ist, dann:
- Wiederholen der Schritte 90 bis 130 mit den Antennenteilen (A1, A2), die nicht an den Mikrocontroller (10) angeschlossen worden sind,
- wenn während des Schrittes 90 alle Antennenteile angeschlossen worden sind, dann
- Schritt 200: Ende des Konfigurationsverfahrens.

7. Kraftfahrzeug, umfassend eine Antennenvorrichtung (D) nach einem der Ansprüche 1 bis 3.

## Claims

1. Communication antenna device (D), able to be placed in a vehicle door, or in a device for charging portable equipment located in a vehicle passenger compartment, for communicating with an antenna of a portable device, said antenna device (D) including:
• a communication antenna (A) including at least two parts, a first part (A1), comprising a maximum number of primary windings (E1_{MAX}) of copper wires and a second part (A2) comprising a maximum number of secondary windings (E2_{MAX}) of copper wires, said two parts being connected to each other by a first switching means (M1),
• a microcontroller (10) electrically connected to said antenna (A), managing the communication between the communication antenna (A) and the antenna of the portable device,
said antenna device (D) being **characterized in that** it further includes:
• control means (20) integrated into the microcontroller,
• at least one second switching means (M2) including a plurality of switches (S1₁, S1₂... S1_{MAX}), which means is controlled by the control means (20), each switch being located between the microcontroller (10), and each primary winding (E1ᵢ) of the first part (A1) and allowing a determined number of primary windings (E1ᵢ) of the first part (A1) to be connected to the microcontroller (10), and
• at least one third switching means (M3) including a plurality of switches (S2₁, S2₂... S2_{MAX}), which means is controlled by the control means (20), each switch being located between the microcontroller (10), and each secondary winding (E2ⱼ) of the second part (A2) and allowing a determined number of secondary windings (E2ⱼ) of the second part (A2) to be connected to the microcontroller (10),
• the first switching means (M1), comprising two sets of switches (S_{A1}, S_{A2}), a first set of switches (S_{A1}) located between the microcontroller (10) and the first part (A1) and a second set of switches (S_{A2}) located between the microcontroller (10) and the second part (A2), which means is controlled by the control means (20), allowing the first part (A1) and/or the second part (A2) to be connected to the microcontroller (10),

2. Antenna device (D) according to the preceding claim, **characterized in that** the two sets of switches (SA1, SA2) are each electrically connected to a capacitor (C1, C2) in order to match a communication frequency to the first part (A1) and the second part (A2).

3. Antenna device (D) according to either one of the preceding claims, **characterized in that** the antenna (A) is a near field communication antenna.

4. Hands-free device for access to a vehicle, **characterized in that** it includes the antenna device (D) according to any one of the preceding claims.

5. Device for charging portable equipment, **characterized in that** it includes the antenna device (D) according to one of claims 1 to 3.

6. Method of configuring a communication antenna (A) device, using the antenna device (D) according to any one of the preceding claims, **characterized in that** it includes the following steps:
• Step 90: determination by the microcontroller (10) of the antenna part or parts (A1, A2) to be connected to said microcontroller (10),
• Step 100:
- connection of the part and/or parts (A1, A2) of the antenna (A) determined during the preceding step, to the microcontroller (10), via the first switching means (M1) and control means (20),
- connection to the microcontroller (10) of an initial number of windings (E1i, E2j) of the part and/or parts (A1, A2) of the antenna (A) connected during the preceding step, via the second switching means (M2) and/or the third switching means (M3) and control means (20),
• Step 110: communication test between the antenna (A) and an antenna of a portable device, if communication is successful:
- Step 300: the antenna is configured, otherwise if the communication has failed, and
- Step 120: if the number of windings (E1i, E2j) is less than the maximum number of windings (E1MAX, E2MAX), then,
• Step 130: incrementation of the number of windings (E1i+1, E2j+1) connected to the microcontroller (10) via the second and third switching means (M2, M3) and control means (20), and repetition of steps 110 to 130,
- otherwise, if the number of windings (E1i+1, E2j+1) connected to the microcontroller (10) is equal to the maximum number of primary and/or secondary windings (E1MAX, E2MAX), then:
• repetition of steps 90 to 130 with the antenna parts (A1, A2) which have not been connected to the microcontroller (10),
• if during step 90 all the antenna parts have been connected then,
• Step 200: end of the configuration method.

7. Motor vehicle including an antenna device (D) according to any one of claims 1 to 3.
